# EUROPÄISCHE PATENTANMELDUNG

(11) **EP 1 637 715 A2**
(43) Veröffentlichungstag der Anmeldung: **22.03.2006**
(21) Anmeldenummer: 05107451.6
(22) Anmeldetag: 12.08.2005
(51) Int. Cl.: F02D 13/02, F02M 25/07

(54) **Brennkraftmaschine**

(30) Priorität: 18.09.2004 DE 102004045394
(71) Anmelder: ROBERT BOSCH GMBH, 70442 Stuttgart (DE)
(72) Erfinder: Kopp, Carsten, 71696 Moeglingen (DE); Stein, Jens-Olaf, 70469 Stuttgart (DE); Wintrich, Thomas, 74321 Bietigheim-Bissingen (DE)

(57) **Zusammenfassung**

Bekannte Brennkraftmaschinen haben in Zylindern axial beweglich angeordnete Kolben, den Zylindern zugeordnete Einlassventile und Auslassventile, die derart zeitlich variabel ansteuerbar sind, dass sich das Schließen der Einlassventile und das Öffnen Auslassventile derart zeitlich überschneidet, dass sich eine Rückhaltung der verbrannten Abgase in einem Brennraum der Zylinder einstellt. Außerdem ist eine über die Einlassventile zu den Zylindern führende Ansaugleitung und eine stromab der Auslassventile angeordnete Abgasleitung vorgesehen. Aufgrund der hohen Temperatur der im Zylinder zurückbleibenden Restgase ergeben sich bezüglich der Stickoxide und der Rußpartikel hohe Abgasemissionen.

Bei der erfindungsgemäßen Brennkraftmaschine werden die Abgasemissionen bezüglich der Stickoxide und der Rußpartikel verbessert, indem die interne Abgasrückführung mit einer externen Niederdruck-Abgasrückführung kombiniert wird.

Erfindungsgemäß ist zusätzlich zur internen Abgasrückhaltung eine Niederdruck-Abgasrückführung (36) vorgesehen, die von der Abgasleitung (8) stromab einer einen Verdichter (29) antreibenden Turbine (30) und stromab einer Abgasreinigungseinrichtung (35) abzweigt und in die Ansaugleitung (3) stromauf des Verdichters (29) mündet.

## Beschreibung

### Stand der Technik

Die Erfindung geht aus von einer Brennkraftmaschine nach der Gattung des Hauptanspruchs.
Es ist schon eine Brennkraftmaschine aus der DE 103 44 913 A1 bekannt mit in Zylindern axial beweglich angeordneten Kolben, mit den Zylindern zugeordneten Einlassventilen und Auslassventilen, die derart zeitlich variabel ansteuerbar sind, dass sich das Schließen der Einlassventile und das Öffnen Auslassventile derart zeitlich überschneidet, dass sich eine Rückhaltung der verbrannten Abgase in einem Brennraum der Zylinder einstellt, und mit einer über die Einlassventile zu den Zylindern führenden Ansaugleitung und einer stromab der Auslassventile vorgesehenen Abgasleitung. Aufgrund der hohen Temperatur der im Zylinder zurückbleibenden Restgase ergeben sich bezüglich der Stickoxide und der Rußpartikel hohe Abgasemissionen.

### Vorteile der Erfindung

Die erfindungsgemäße Brennkraftmaschine mit den kennzeichnenden Merkmalen des Hauptanspruchs hat demgegenüber den Vorteil, daß auf einfache Art und Weise eine Verbesserung der Stickoxid- und Rußpartikel-Emissionen erzielt wird, indem zusätzlich zur internen Abgasrückhaltung eine Niederdruck-Abgasrückführung vorgesehen ist, die von der Abgasleitung stromab einer einen Verdichter antreibenden Turbine und stromab einer Abgasreinigungseinrichtung abzweigt und in die Ansaugleitung stromauf des Verdichters mündet.

Durch die in den Unteransprüchen aufgeführten Maßnahmen sind vorteilhafte Weiterbildungen und Verbesserungen der im Hauptanspruch angegebenen Brennkraftmaschine möglich.

Besonders vorteilhaft ist, wenn die Niederdruck-Abgasrückführung einen Abgasrückführungskühler und ein Regelventil aufweist. Mittels des Abgasrückführungskühlers wird das zum Zylinder rückgeführte Abgas weiter abgekühlt, so dass die Dichte des Abgases steigt und eine bessere Brennraumfiillung erzielbar ist. Außerdem entstehen durch die vergleichsweise geringe Temperatur des rückgeführten Gases im Zylinder wenig Stickoxide und Rußpartikel. Mittels des Regelventils wird der Volumenstrom des rückgeführten Abgases und damit der Inertgasanteil der Brennraumfiillung eingestellt.

Gemäß einem vorteilhaften ersten Ausführungsbeispiel werden die variablen Ventilsteuerzeiten durch eine elektrohydraulische oder elektromechanische Betätigung der Gaswechselventile erreicht. Bei dieser Brennkraftmaschine wird die Nockenwelle durch mehrere hydraulische oder elektromagnetische Aktoren ersetzt, die die einzelnen Gaswechselventile, also die Einlass- und Auslassventile, betätigen. Auf diese Weise erreicht man die größte Variabilität bei der Einstellung der Ventilsteuerzeiten.

Nach einer vorteilhaften zweiten Ausführung werden die variablen Ventilsteuerzeiten jeweils durch ein variabel steuerbares Flüssigkeitsvolumen zwischen einem Nocken einer Nockenwelle und einem dem Nocken zugeordneten Gaswechselventil erreicht. Dieses sogenannte Lost-Motion-System ist deutlich einfacher aufgebaut und kostengünstiger herstellbar als die weiteren Ausführungsbeispiele.

Gemäß einer dritten vorteilhaften Ausgestaltung ist vorgesehen, die variablen Ventilsteuerzeiten durch eine Phasenverstellung zwischen einer Kurbelwelle und einer Nockenwelle einzustellen.

Eine vierte vorteilhafte Ausführung sieht vor, die variablen Ventilsteuerzeiten durch eine mechanische Nockenhubübersetzung zu erzielen, bei der der Nockenhub mittels einer mechanischen Übersetzung in einen kontinuierlich veränderbaren Ventilhub übersetzt wird.

Sehr vorteilhaft ist es, wenn die Abgasreinigungseinrichtung durch einen Katalysator und/oder einen Partikelfilter gebildet ist, da auf diese Weise das über die externe Niederdruck-Abgasrückführung rückgeführte Abgas weniger Kohlenwasserstoffe und Kohlenmonoxid sowie nur noch sehr wenig Rußpartikel aufweist.

Auch vorteilhaft ist, wenn stromab des Verdichters ein Ladeluftkühler vorgesehen ist, da das angesaugte Gasgemisch bestehend aus Frischluft und rückgeführtem Abgas auf diese Weise nochmals abgekühlt wird.

Darüber hinaus vorteilhaft ist, wenn das Verhältnis von rückgeführtem Abgas aus der Niederdruck-Abgasrückführung zur angesaugten Frischluft eine Niederdruck-Abgasrückführrate und das Verhältnis von im Brennraum zurückgehaltenem Abgas zur angesaugten Frischluft eine interne Abgasrückführrate bildet, wobei das Verhältnis der Niederdruck-Abgasrückführrate zur internen Abgasrückführrate jeweils dem Betriebszustand der Brennkraftmaschine anpassbar ist. Auf diese Weise wird das Ansprechverhalten der Brennkraftmaschine auf gewünschte Laständerungen deutlich verbessert und kurzzeitiger Luftmangel verhindert.

Desweiteren vorteilhaft ist, wenn die interne Abgasrückführrate bei instationärem Betriebszustand der Brennkraftmaschine höher ist als die Niederdruck-Abgasrückführrate, da auf diese Weise schneller auf vom Fahrer gewünschte Laständerungen reagiert werden kann.

### Zeichnung

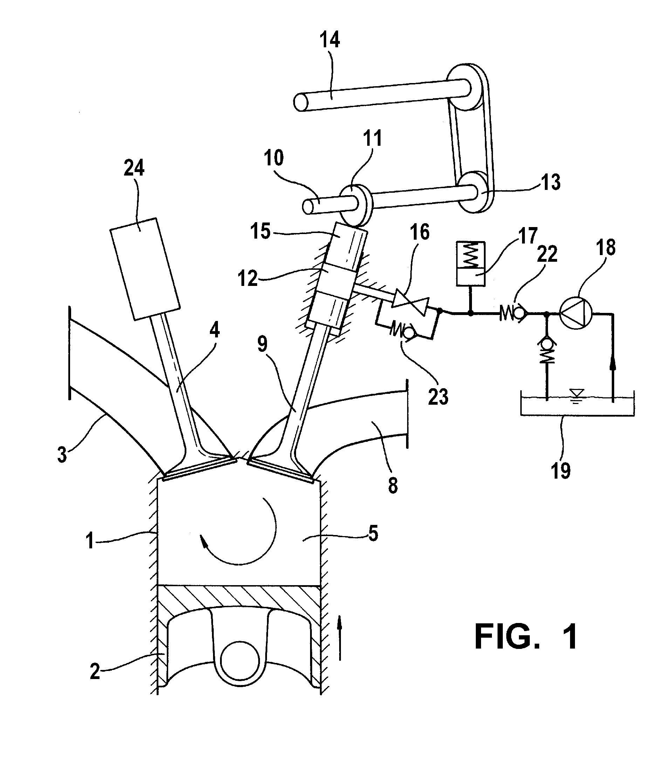

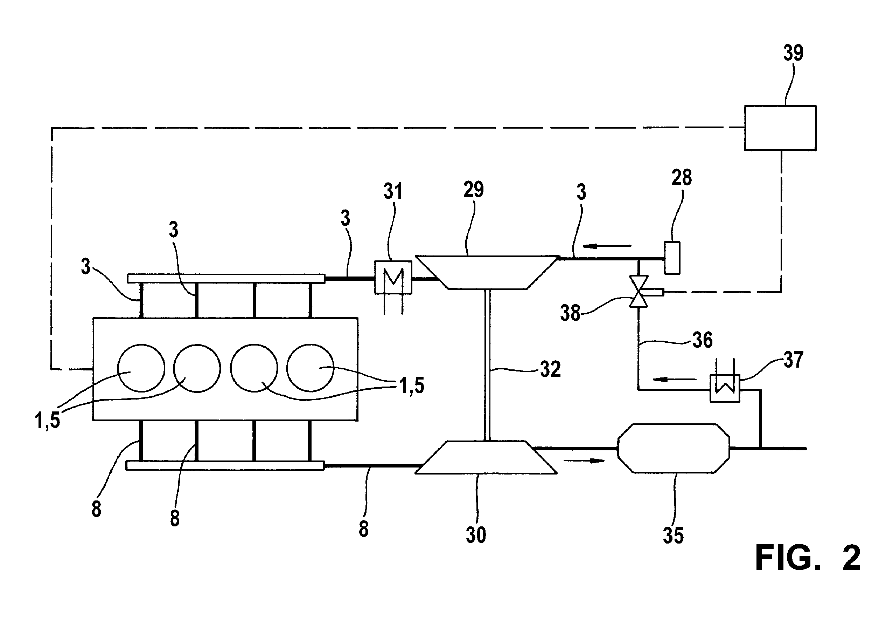

Ein Ausführungsbeispiel der Erfindung ist in der Zeichnung vereinfacht dargestellt und in der nachfolgenden Beschreibung näher erläutert.
Es zeigen Fig.1 eine erste schematische Ansicht und Fig.2 eine zweite schematische Ansicht der erfindungsgemäßen Brennkraftmaschine.

Beschreibung des Ausführungsbeispiels

Fig.1 zeigt eine schematische Ansicht eines der Zylinder der erfindungsgemäßen Brennkraftmaschine, die beispielsweise als Dieselmotor oder als Ottomotor ausgeführt sein kann.

Die erfindungsgemäße Brennkraftmaschine weist mehrere Zylinder 1 auf, in denen jeweils ein Kolben 2 axial beweglich angeordnet ist. Der Kolben 2 führt in den Zylindern 1 jeweils eine periodische Auf- und Abbewegung aus.

Die Brennkraftmaschine arbeitet beispielsweise nach dem sogenannten Viertaktverfahren. In einem Ansaugtakt wird Luft oder Luft-Kraftstoffgemisch über eine Ansaugleitung 3 und zumindest ein geöffnetes Einlassventil 4 in einen Brennraum 5 des jeweiligen Zylinders 1 angesaugt, indem der Kolben 2 von einem oberen Totpunkt ausgehend sich nach unten bewegt und den Brennraum 5 auf diese Weise vergrößert. In einem unteren Totpunkt hat das Volumen des Brennraums 5 seine maximale Größe erreicht. In einem Verdichtungstakt sind das Einlassventil 4 und ein aus dem Brennraum 5 in eine Abgasleitung 8 führendes Auslassventil 9 geschlossen und der Kolben 2 führt eine den Brennraum 5 verkleinernde Aufwärtsbewegung aus. Dabei wird die Luft oder das Luft-Kraftstoffgemisch im Brennraum 5 verdichtet. In einem Arbeitstakt befmdet sich ein Luft-Kraftstoffgemisch im Brennraum 5. Das Kraftstoff-Luftgemisch zündet im Arbeitstakt oder wird gezündet, so dass der durch die Verbrennung entstehende Druck im Brennraum 5 den Kolben 2 nach unten bewegt. In einem Ausstosstakt öffnet das Auslassventil 9 und die bei der Verbrennung entstandenen heißen Gase strömen aus dem Brennraum 5 über das Auslassventil 9 in die Abgasleitung 8 aus.

Die Einlassventile 4 und die Auslassventile 9 werden allgemein auch als Gaswechselventile bezeichnet.

Die Einlassventile 4 und die Auslassventile 9 der Brennkraftmaschine sind erfindungsgemäß derart zeitlich variabel betätigbar, dass der Zeitpunkt des Öffnens und des Schliessens zumindest der Auslassventile 9 und beispielsweise der Einlassventile 4 in Abhängigkeit von einem Betriebszustand der Brennkraftmaschine veränderlich einstellbar ist. Außerdem kann vorgesehen sein, den Hub der Einlassventile 4 und/oder der Auslassventile 9 und die Geschwindigkeit des Öffnens und Schliessens der Einlassventile 4 und/oder der Auslassventile 9 in Abhängigkeit von einem Betriebszustand der Brennkraftmaschine variabel auszuführen.

Die Gaswechselventile der erfmdungsgemäßen Brennkraftmaschine können beispielsweise mittels einer Nockenwelle 10 gesteuert sein, die über Nocken 11 direkt auf die Gaswechselventile wirkt und diese öffnet und schliesst. Um die Ventilsteuerzeiten, also die Zeitpunkte des Öffnens und Schliessens, der Brennkraftmaschine mit Nockenwelle zumindest abschnittsweise variabel auszuführen, können sogenannte Phasensteller 13, die die Nockenwelle 10 gegenüber einer die Nockenwelle 10 antreibenden Kurbelwelle 14 phasenverstellen und/oder eine sogenannte Zweipunktverstellung, bei der zwischen zwei unterschiedlichen Nocken für ein Gaswechselventil umgeschaltet werden kann, oder eine mechanische Nockenhubübersetzung, bei der der Nockenhub mittels einer mechanischen Übersetzung in einen kontinuierlich veränderbaren Ventilhub übersetzt wird, vorgesehen sein.

Ein Phasensteller ist beispielsweise aus der nachveröffentlichten deutschen Patentanmeldung 10 2004 027636.6 bekannt, wobei deren Inhalt ausdrücklich Teil der Offenbarung dieser Anmeldung sein soll.

Außerdem ist es möglich, zwischen dem Nocken 11 der Nockenwelle 10 und dem Einlassventil 4 und/oder Auslassventil 9 jeweils eine hydraulische Fluidkammer 12 vorzusehen, wie es beispielhaft in der Fig.1 für die Auslassventile 9 gezeigt ist. Der Nocken 11 wirkt dabei über einen Hydraulikkolben 15 und das Fluid der Fluidkammer 12 mittelbar auf die Gaswechselventile. Der Hub des Nockens 11 kann dabei über die Fluidkammer 12 verkleinert werden, indem Flüssigkeit durch das Öffnen eines mit der Fluidkammer 12 strömungsverbundenen Steuerventils 16 aus der Fluidkammer 12 ausströmt und in einem Speicher 17 zwischengespeichert wird. Zur Wiederbefüllung der Fluidkammer 12 fördert eine Förderpumpe 18 Fluid aus einem Vorratsbehälter 19 über ein erstes Rückschlagventil 22 und ein parallel zum Steuerventil 16 angeordnetes zweites Rückschlagventil 23 in die Fluidkammer 12. Diese Ausführung wird im Stand der Technik auch als Lost-Motion-System bezeichnet. Eine Brennkraftmaschine mit Lost-Motion ist beispielsweise aus der US 4,889,084 bekannt, wobei deren Inhalt ausdrücklich Teil der Offenbarung dieser Anmeldung sein soll.

Die erfindungsgemäße Brennkraftmaschine kann auch ohne Nockenwelle ausgeführt sein und beispielsweise elektromagnetische oder elektrohydraulische Aktoren 24, die die Einlassventile 4 und/oder die Auslassventile 9 betätigen, aufweisen, wie es in Fig.1 beispielhaft für die Einlassventile 4 gezeigt ist. Dies ermöglicht eine variable Ventilsteuerung mit mehr Freiheitsgraden als bei den Brennkraftmaschinen mit Nockenwelle. Beispielsweise ist nicht nur der Zeitpunkt des Öffnens und des Schliessens oder der Hub der Gaswechselventile, sondern auch die Geschwindigkeit des Öffnens und Schliessens der Einlassventile und/oder der Auslassventile variabel einstellbar.

Ein elektrohydraulischer Aktor ist beispielsweise aus der US 6,321,702 bekannt, wobei deren Inhalt ausdrücklich Teil der Offenbarung dieser Anmeldung sein soll.

Fig.2 zeigt eine schematische Gesamtansicht der erfindungsgemäßen Brennkraftmaschine mit mehreren Zylindern, der Ansaugleitung und der Abgasleitung.

Bei der Brennkraftmaschine nach Fig.2 sind die gegenüber der Brennkraftmaschine nach Fig. 1 gleichbleibenden oder gleichwirkenden Teile durch die gleichen Bezugszeichen gekennzeichnet.

In der Ansaugleitung 3 ist beispielsweise ein Luftfilter 28 vorgesehen, durch den im Ansaugtakt Frischluft aus der Atmosphäre angesaugt wird. Stromab des Luftfilters 28 ist beispielsweise ein Verdichter 29 angeordnet, der das angesaugte Gas komprimiert. Der Verdichter 29 kann mechanisch durch die Brennkraftmaschine oder durch eine in der Abgasleitung 8 angeordnete Turbine 30 angetrieben sein. Stromab des Verdichters 29 ist beispielsweise ein Ladeluftkühler 31 vorgesehen, der die im Verdichter 29 erwärmte und verdichtete Luft wieder abkühlt, um die Dichte der Luft zu erhöhen. Der Ladeluftkühler 31 ist beispielsweise luft- oder kühlwassergekühlt. Die Ansaugleitung 3 verzweigt stromab des Ladeluftkühlers 31 und mündet über die Einlassventile 4 in die Brennräume 5 der Zylinder 1.

Das bei der Verbrennung in den Brennräumen 5 der Zylinder 1 entstandene heiße Abgas wird im Ausstosstakt über die Auslaßventile 9 in die Abgasleitung 8 geleitet, in der beispielsweise die Turbine 30 vorgesehen ist. Stromauf der Turbine 30 verzweigt sich die Abgasleitung 8 und ist über die Auslassventile 9 mit den einzelnen Brennräumen 5 der Zylinder 1 verbunden. Das heiße und unter Druck stehende Abgas treibt die Turbine 30 an, die wiederum den Verdichter 29 über eine Antriebswelle 32 antreibt. Stromab der Turbine 30 ist eine Abgasreinigungseinrichtung 35 angeordnet, die beispielsweise einen Oxidationskatalysator und einen Rußpartikelfilter aufweist.

Erfindungsgemäß ist zusätzlich zu einer sogenannten internen Abgasrückhaltung bzw. - rückführung eine Niederdruck-Abgasrückführung 36 vorgesehen, die von der Abgasleitung 8 stromab der den Verdichter 29 antreibenden Turbine 30 und stromab der Abgasreinigungseinrichtung 35 abzweigt und in die Ansaugleitung 3 stromauf des Verdichters 29 mündet.

Mittels der internen Abgasrückführung und der Niederdruck-Abgasrückführung 36 wird bereits verbranntes, inertes Abgas der Frischluft oder dem Luft-Kraftstoffgemisch im Brennraum 5 zugemischt. Beide Abgasrückführungen senken die stark temperaturabhängigen Stickoxidemissionen, da durch das zugemischte inerte Abgas die Spitzentemperatur der Verbrennung verringert wird.

Der Druck in der Abgasleitung 8 ist stromauf der Turbine 30 höher als der Druck in der Abgasleitung 8 stromab der Turbine 30.

Mittels der Niederdruck-Abgasrückführung 36 wird Abgas mit vergleichsweise niedriger Temperatur und geringem Überdruck relativ zur Atmosphäre aus der Abgasleitung 8 zurück in die Ansaugleitung 3 geleitet und dort der durch den Luftfilter 28 angesaugten Frischluft zugemischt. Das auf diese Weise rückgeführte Abgas wird zusammen mit der aus der Atmosphäre angesaugten Frischluft im Ansaugtakt in Richtung der Zylinder 1 angesaugt. Das Verhältnis von zugemischtem rückgeführtem Abgas aus der Niederdruck-Abgasrückführung 36 zu der angesaugten Frischluft wird im folgenden als externe Niederdruck-Abgasrückführrate bezeichnet. In der Niederdruck-Abgasrückführung 36 ist beispielsweise ein Abgasrückführungskühler 37 zur weiteren Kühlung des rückgeführten Gases und ein Regelventil 38 zur Regelung des Volumenstroms des rückgeführten Gases angeordnet.

Bei einer bekannten Hochdruck-Abgasrückfiihrung wird dagegen Abgas aus der Abgasleitung 8 stromauf der Turbine 30 entnommen und über einen Abgaskühler und ein Abgasrückführventil in die Ansaugleitung 3 stromab des Ladeluftkühlers 31 geleitet.

Die Niederdruck-Abgasrückführung 36 hat gegenüber der Hochdruck-Abgasrückführung den Vorteil, dass das Abgas bereits durch die Abgasreinigungseinrichtung 35 gereinigt ist. Beispielsweise sind die Kohlenwasserstoffe und Kohlenmonoxide aufoxidiert und die Rußpartikel aus dem Abgas entfernt, so dass diese Komponenten nicht über die Abgasrückführung zurück in die Brennräume 5 der Zylinder gelangen. Auf diese Weise werden die Abgasemissionen gesenkt. Außerdem ist das rückgeführte Abgas der Niederdruck-Abgasrückführung 36 deutlich kühler als bei der Hochdruck-Abgasrückführung, so dass die Dichte des Abgases und als Folge davon der über die Turbine 30 fließende Abgas-Massenstrom höher ist. Dadurch ist ein besserer Wirkungsgrad des Verdichters 29 erreicht, was einen geringeren Kraftstoffverbrauch der Brennkraftmaschine bewirkt. Weiterhin sind die Stickoxidemissionen wegen des kühleren Abgases niedriger als bei der Hochdruck-Abgasrückführung. Außerdem ergibt sich durch den größeren über die Turbine 30 fließenden Abgas-Massenstrom stromab des Verdichters 29 ein höherer Druck. Da das Abgas der Niederdruck-Abgasrückführung 36 über den Verdichter 29 strömt, sind die Frischluft und das rückgeführte Abgas bei der Niederdruck- Abgasrückführung deutlich besser durchmischt als bei der Hochdruck-Abgasrückführung, so dass das rückgeführte Abgas gleichmässig auf alle Brennräume 5 der Zylinder 1 verteilt wird. Das rückgeführte Abgas der Hochdruck-Abgasrückführung wird dagegen erst stromab des Verdichters 29 und vergleichsweise nahe der Einleitung in die Brennräume 5 der Zylinder 1 zur angesaugten Frischluft zugemischt, so dass eine ungleichmässige Verteilung des rückgeführten Abgases auf die einzelnen Brennräume 5 der Zylinder auftreten kann.

Die Niederdruck-Abgasrückführung 36 hat gegenüber der Hochdruck-Abgasrückührung den Nachteil, dass zwischen der Einleitung des rückgeführten Abgases in die Ansaugleitung 3 und den Einlassventilen 4 der Zylinder 1 ein vergleichsweise großes Volumen besteht, so dass eine Verstellung des Regelventils 38 nicht schnell genug eine Veränderung der Abgasrückführungsrate an den Einlassventilen 4 bewirkt. Die Regelung der Niederdruck-Abgasrückführung ist daher träger als die Regelung der Hochdruck-Abgasrückführung. Dadurch reagiert die Brennkraftmaschine langsamer auf Laständerungen, beispielsweise eine gewünschte Drehzahlerhöhung. Bei dynamischen Änderungen des Betriebszustandes der Brennkraftmaschine, beispielsweise einer gewünschte Drehzahlerhöhung, kann es kurzzeitig zu Sauerstoffmangel im Brennraum 5 der Zylinder 1 kommen, so dass kurzzeitig viele Rußpartikel im Abgas entstehen.

Dieser Nachteil der Niederdruck-Abgasrückführung 36 wird erfmdungsgemäß dadurch aufgehoben, dass zusätzlich zur Niederdruck-Abgasrückführung 36 die interne Abgasrückführung bzw. -rückhaltung vorgesehen ist.

Die interne Abgasrückhaltung wird beispielsweise dadurch erzielt, dass nicht das gesamte Abgas im Ausstoßtakt aus dem Brennraum ausgestoßen wird, sondern ein vorbestimmter Anteil des Abgases im Brennraum 5 des jeweiligen Zylinders verbleibt oder in die Ansaugleitung 3 geleitet wird und im nachfolgenden Ansaugtakt mit angesaugt wird. Es kann auch Abgas aus der Abgasleitung 8 zurückgesaugt werden. Das Rückhalten des Abgases im Brennraum 5 wird beispielsweise durch zeitlich frühes Schliessen der Auslaßventile erreicht. Das Leiten der Abgase in die Ansaugleitung 3 wird dadurch erzielt, dass das Einlassventil 4 und das Auslassventil 9 in einer Ventilüberschneidungsphase gleichzeitig geöffnet sind. Beide Ausführungsformen der internen Abgasrückhaltung oder -rückführung erfordern eine variable Ventilsteuerung. Die Brennkraftmaschine ist daher mit einer variablen Ventilsteuerung derart auszuführen, dass zumindest das Schliessen der Auslassventile 9 zeitlich variabel ist. Mögliche Ausführungsbeispiele zur Ausbildung einer variablen Ventilsteuerung an der erfindungsgemäßen Brennkraftmaschine sind zuvor bereits beschrieben worden.

Durch das frühe Schliessen der Auslaßventile 9 mittels der internen Abgasrückhaltung bleiben heiße Restgase im Brennraum 5 zurück. Im auf den Ausstoßtakt mit frühem Auslaßventilschließen nachfolgenden Ansaugtakt wird das Einlaßventil 4 geöffnet, so dass zusätzlich Frischluft und/oder rückgeführtes Abgas aus der externen Niederdruck-Abgasrückführung 36 in den Brennraum 5 einströmt. Das Verhältnis von restlichem Abgas im Brennraum 5 durch internen Abgasrückführung bzw. -rückhaltung zur angesaugten Frischluft wird im folgenden als interne oder innere Abgasrückführrate bezeichnet. Eine Gesamt-Abgasrückführrate ergibt sich aus der Summe der internen Abgasrückführrate und der Niederdruck-Abgasrückführrate. Der Anteil der internen Abgasrückführrate und der Anteil der Niederdruck-Abgasrückführrate an der Gesamt-Abgasrückführrate werden erfindungsgemäß abhängig vom Betriebszustand der Brennkraftmaschine verändert.

Erfmdungsgemäß wird der Volumenstrom der Niederdruck-Abgasrückführung 36 durch Verstellen des Regelventils 38 und das rückgehaltene Abgasvolumen der internen Abgasrückhaltung durch das Variieren des Schließzeitpunkts der Auslassventile 9 geregelt. Die Regelung des Schließzeitpunkts der Auslassventile 9 erfolgt für jeden Zylinder 1 einzeln. Die Regelung der Niederdruck-Abgasrückführung 36 und der internen Abgasrückhaltung erfolgt durch ein elektronisches Steuergerät 39.

Die interne Abgasrückführung mittels variabler Ventilsteuerung hat den Vorteil, dass eine Veränderung des Schließzeitpunktes der Auslaßventile 9 sehr schnell eine Veränderung der internen Abgasrückführrate und der Gesamt-Abgasrückführrate bewirkt, so dass schnell auf Änderungen des Betriebszustandes reagiert werden kann und ein Sauerstoffmangel im Brennraum 5 vermieden wird. Je früher die Auslassventile 9 geschlossen werden, desto höher ist die interne Abgasrückführrate.

Erfindungsgemäß wird die Brennkraftmaschine gleichzeitig sowohl mit der internen Abgasrückführung als auch mit der externen Niederdruck-Abgasrückführung 36 betrieben. Durch die Kombination der beiden Abgasrückführungen wird die Temperatur der in den Brennraum 5 zurückgeführten bzw. im Brennraum zurückgehaltenen Abgase gegenüber einer reinen internen Abgasrückführung gesenkt, so dass auf diese Weise die stark temperaturabhängigen Stickoxidemissionen verringert werden. Die Regelung der Gesamt-Abgasrückführrate erfolgt durch Verändern der internen Abgasrückführrate und/oder der Niederdruck-Abgasrückführrate.

Das Verhältnis der Niederdruck-Abgasrückführrate zur internen Abgasrückführrate wird jeweils schnell an den Betriebszustand der Brennkraftmaschine angepasst. Beispielsweise wird das Verhältnis der Niederdruck-Abgasrückführrate zur internen Abgasrückführrate bei stationärem Betriebszustand der Brennkraftmaschine erhöht, um minimale Abgasemissionen bezüglich Stickoxid und Rußpartikel zu erreichen. Bei instationärem Betriebszustand der Brennkraftmaschine, beispielsweise bei starken Laständerungen, wird das Verhältnis von der Niederdruck-Abgasrückführrate zur internen Abgasrückführrate stark verringert, um zeitlich schnell und genau auf die Laständerungen zu reagieren, und zusätzlich die Gesamt-Abgasrückführrate verkleinert, um einen lokalen Sauerstoffmangel in den Brennräumen zu vermeiden, der kurzfristig zum Auftreten von Rußwolken führen kann.

## Patentansprüche

1. Brennkraftmaschine mit in Zylindern axial beweglich angeordneten Kolben, mit den Zylindern zugeordneten Einlassventilen und Auslassventilen, die derart ansteuerbar sind, dass die Ventilsteuerzeiten zumindest der Auslassventile in Abhängigkeit von einem Betriebszustand der Brennkraftmaschine variabel einstellbar sind und eine interne Abgasrückhaltung in einem Brennraum der Zylinder erreichbar ist, mit einer über die Einlassventile zu den Zylindern führenden Ansaugleitung und einer stromab der Auslassventile vorgesehenen Abgasleitung, **dadurch gekennzeichnet, dass** zusätzlich zur internen Abgasrückhaltung eine Niederdruck-Abgasrückführung (36) vorgesehen ist, die von der Abgasleitung (8) stromab einer einen Verdichter (29) antreibenden Turbine (30) und stromab einer Abgasreinigungseinrichtung (35) abzweigt und in die Ansaugleitung (3) stromauf des Verdichters (29) mündet.

2. Brennkraftmaschine nach Anspruch 1, **dadurch gekennzeichnet, dass** die Niederdruck-Abgasrückführung (36) einen Abgasrückführungskühler (37) und ein Regelventil (38) aufweist.

3. Brennkraftmaschine nach Anspruch 2, **dadurch gekennzeichnet, dass** der Volumenstrom der Niederdruck-Abgasrückführung (36) mittels des Regelventils (38) regelbar ist.

4. Brennkraftmaschine nach Anspruch 1, **dadurch gekennzeichnet, dass** die variablen Ventilsteuerzeiten durch eine elektrohydraulische oder elektromechanische Betätigung der Einlassventile (4) und der Auslassventile (9) erreicht sind.

5. Brennkraftmaschine nach Anspruch 1, **dadurch gekennzeichnet, dass** die variablen Ventilsteuerzeiten durch ein variables Flüssigkeitsvolumen (12) zwischen einem Nocken (11) einer Nockenwelle (10) und einem dem Nocken (11) zugeordneten Einlassventil (4) oder Auslassventil (9) erreicht sind.

6. Brennkraftmaschine nach Anspruch 1, **dadurch gekennzeichnet, dass** die variablen Ventilsteuerzeiten mittels eines Phasenstellers (13) erreicht sind, der die Nockenwelle (10) gegenüber einer Kurbelwelle (14) phasenverstellt.

7. Brennkraftmaschine nach Anspruch 1, **dadurch gekennzeichnet, dass** die variablen Ventilsteuerzeiten durch eine mechanische Nockenhubübersetzung erreicht sind.

8. Brennkraftmaschine nach Anspruch 1, **dadurch gekennzeichnet, dass** die Abgasreinigungseinrichtung (35) durch einen Katalysator und/oder einen Partikelfilter gebildet ist.

9. Brennkraftmaschine nach Anspruch 1, **dadurch gekennzeichnet, dass** das Verhältnis von rückgeführtem Abgas aus der Niederdruck-Abgasrückführung zur angesaugten Frischluft eine Niederdruck-Abgasrückführrate und das Verhältnis von im Brennraum zurückgehaltenem Abgas zur angesaugten Frischluft eine interne Abgasrückführrate bildet, wobei das Verhältnis der Niederdruck-Abgasrückführrate zur internen Abgasrückführrate jeweils dem Betriebszustand der Brennkraftmaschine anpassbar ist.

10. Brennkraftmaschine nach Anspruch 9, **dadurch gekennzeichnet, dass** die interne Abgasrückführrate bei instationärem Betriebszustand der Brennkraftmaschine höher ist als die Niederdruck-Abgasrückführrate.
